# FASCICULE DE BREVET EUROPEEN

(11) **EP 4 466 087 B1**
(45) Date de publication et mention de la délivrance du brevet: **26.11.2025**
(21) Numéro de dépôt: 23701424.6
(22) Date de dépôt: 19.01.2023
(51) Int. Cl.: B01D 53/04, B01D 53/047, B01D 51/10, C01B 21/04, F02C 9/00, F02C 3/00, F02C 7/00, F01D 15/00, F25J 3/02

(54) **INSTALLATION POUR RÉCUPÉRER DU CO2 DANS UN FLUX GAZEUX D'ALIMENTATION**
ANLAGE ZUR RÜCKGEWINNUNG VON CO2 AUS EINEM EINSATZGASSTROM
FACILITY FOR RECOVERING CO2 FROM A FEED GAS FLOW

(30) Priorité: 21.01.2022 FR 2200530
(43) Date de publication de la demande: 27.11.2024
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: CAO, Jian-Wei, Hangzhou, Zhejiang 310012 (CN); RODRIGUES, Guillaume, 94503 Champigny sur Marne (FR); RAVENTOS, Martin, 94503 Champigny sur Marne (FR); DUBETTIER, Richard, 94503 Champigny sur Marne (FR); LECLERC, Mathieu, 94503 Champigny sur Marne (FR)
(74) Mandataire: Air Liquide
(86) Numéro de dépôt international: PCT/EP2023/051275
(87) Numéro de publication internationale: WO 2023/139171

(56) Documents cités:
- FR-A1- 2 924 951
- JP-A- 2004 210 597
- US-A1- 2013 333 391
- US-A1- 2014 230 401
- US-A1- 2018 036 670

## Description

La présente invention porte sur une installation pour récupérer du CO2 dans un flux gazeux d'alimentation qui est notamment une fumée de combustion.

L'hydrogène est un vecteur énergétique qui joue un rôle croissant dans la décarbonation de différents secteurs, notamment les transports et l'industrie. L'hydrogène peut être produit à partir de la réaction de reformage du gaz naturel (dans des fours SMR - « Steam Methane Reforming » ou reformage de méthane à la vapeur d'eau). Dans les unités SMR, la production d'hydrogène s'accompagne d'une production importante de CO2. Une unité de capture CO2 de type PSA (qui est un dispositif d'adsorption par modulation de pression, ou en anglais « Pressure Swing Adsorption ») peut être ajoutée à un SMR afin de réduire l'empreinte carbone de la production d'hydrogène par SMR. La capture de CO2 (e.g. traitement et liquéfaction CO2 pour usage alimentaire ou pour séquestration) peut être réalisée par voie cryogénique ou par voie non cryogénique, par exemple, lavage aux amines. Un flux gazeux riche en azote à haute pression est produit à cette occasion dans l'unité PSA. L'invention propose d'améliorer l'efficacité énergétique de l'installation par rapport aux installations existantes (US 2013/333391 A1, US 2018/036670 A1, US 2014/230401 A1).

L'invention a ainsi pour objet une installation pour récupérer du CO2 dans un flux gazeux d'alimentation qui est notamment une fumée de combustion, cette installation comportant :
- une unité de traitement du flux gazeux d'alimentation, par adsorption à modulation de pression pour produire, à partir du flux gazeux d'alimentation, un flux gazeux riche en CO2 et un flux gazeux riche en azote,
- un ensemble de compression comportant au moins un étage de compression pour comprimer le flux gazeux d'alimentation avant son entrée dans l'unité de traitement,
- une turbine comportant au moins un étage de détente capable de délivrer une énergie mécanique générée par la détente du flux gazeux riche en azote dans cet étage de détente,
- un dispositif thermique agencé pour permettre des transferts de chaleur entre le flux gazeux d'alimentation sortant d'un étage de compression et le flux gazeux riche en azote avant détente dans l'étage de détente, de sorte à réchauffer le flux gazeux riche en azote préalablement à sa détente,
- un dispositif de valorisation de l'énergie mécanique délivrée par l'étage de détente.

Le flux gazeux d'alimentation, en amont de l'ensemble de compression, peut, à titre d'exemple, contenir de 10% à 60% molaire de CO2, notamment de 15% à 50% molaire de CO2. Le restant est majoritairement de l'azote et de petites quantités d'O2. Potentiellement de l'argon Ar peut être présent avec un ordre de grandeur de 1% molaire ou moins, ainsi que des traces d'impuretés, en particulier des NOx.

Le flux gazeux d'alimentation peut provenir d'un reformeur SMR, d'une cimenterie, d'une unité d'oxycombustion, ou une usine de chaux par exemple.

Le flux gazeux d'alimentation peut avoir subi un pré-traitement avant d'entrer dans l'installation, par exemple à travers une unité de lavage aux amines ou une unité de filtration.

Le flux gazeux riche en azote sortant de l'unité PSA en haute pression peut contenir, en plus de l'azote, les constituants les moins adsorbables tels que, le cas échéant, O2, Ar, NO.

Le pourcentage d'azote dans le flux riche en azote est notamment compris entre 50% et 90% volumétrique.

Le C02 représente une part par exemple de 50% à 85% volumétrique dans le flux gazeux riche en CO2.

D'une manière générale, les compositions sont données en base sèche, c'est-à-dire on retire l'eau (H2O) de la composition du gaz et l'on norme à 100 les constituants restants.

Selon l'un des aspects de l'invention, le flux gazeux d'alimentation arrive à l'unité de traitement, après avoir été comprimé dans l'ensemble de compression, à une pression comprise dans une plage de 3 à 15 bar abs, notamment de 6 à 12 bar abs, notamment encore 8 à 10 bar abs, et à une température proche de l'ambiante, par exemple entre 5 et 45°C.

Selon l'un des aspects de l'invention, le flux gazeux riche en azote est refoulé de l'unité de traitement à haute pression, notamment à une pression comprise entre 8 et 10 bars.

Selon l'un des aspects de l'invention, l'ensemble de compression comprend un compresseur centrifuge dans lequel le flux gazeux d'alimentation peut être accéléré à travers une ou plusieurs roues mises en rotation par un moteur, notamment un moteur électrique.

L'énergie ainsi acquise par le flux gazeux est transformée en une augmentation de sa pression statique dans un diffuseur situé en sortie de chacune des roues. L'arrangement des roues de l'ensemble de compression dépend de caractéristiques du procédé, par exemple le débit, le taux de compression, la composition du gaz, mais aussi de la technologie propre aux différents constructeurs de compresseurs.

De manière générale, le moteur entraîne un axe de rotation principal associé à un engrenage principal et éventuellement un engrenage annexe. Ces engrenages sont liés mécaniquement à des pignons couplés à des axes de rotation secondaires. Chaque engrenage peut entraîner de la sorte plusieurs pignons. Les dimensions respectives de l'engrenage et du pignon déterminent la vitesse de rotation de l'axe secondaire en fonction de la vitesse de rotation du moteur.

Dans le cas où il y a un seul étage de compression, l'axe secondaire entraîne l'unique roue permettant de comprimer le flux gazeux à la pression choisie.

Lorsque que l'ensemble de compression comporte plusieurs roues pour réaliser le taux de compression global choisi, c'est-à-dire le ratio de la pression de sortie sur la pression d'entrée dans l'ensemble de compression, il y a différents arrangements possibles pour ces roues.

On note aussi que, dans le cas où la compression se fait en plusieurs étages, on définit un taux de compression par étage, c'est-à-dire le ratio pression de sortie de l'étage en question sur sa pression en entrée.

On remarque également que, dans ce cas, on peut jouer en partie sur les taux de compression respectifs des différents étages afin d'obtenir le taux de compression global, cela en restant dans les limites des dimensionnements possibles, en particulier en respectant les vitesses et températures maxima admissibles. Cette souplesse peut permettre d'intégrer plus facilement les diverses roues de compression dans l'ensemble de compression. L'invention prévoit d'associer à l'ensemble de compression, une ou plusieurs roues d'une turbine de détente afin de récupérer l'énergie mécanique produite par la détente du flux gazeux riche en azote, ce qui permet de diminuer l'énergie que doit apporter le moteur.

Dans la présente invention, la turbine, encore appelée turbine d'expansion, est un équipement permettant la détente d'un fluide de sa haute pression jusqu'à sa basse pression, le ratio de ces pressions étant appelé taux de détente.

Une turbine comporte un ou plusieurs étages de détente, le nombre d'étages de détente dépendant des conditions opératoires, en particulier du taux de détente.

Dans le cas où la détente se fait en plusieurs étages, on définit aussi un taux de détente par étage, c'est-à-dire dans ce cas, le ratio pression d'entrée sur pression de sortie de l'étage en question.

La détente du gaz s'effectue, de façon très générale, à travers une ou plusieurs roues mises en rotation par le gaz et ralenties par un frein. En pratique, la turbine peut alors comporter plusieurs roues en série sur le flux gazeux, chacune des roues pouvant avoir sa propre géométrie et sa propre vitesse de rotation.

Selon l'un des aspects de l'invention, le dispositif de valorisation est un générateur électrique capable d'utiliser l'énergie mécanique délivrée par l'étage de détente pour produire de l'électricité.

Ce générateur électrique permet de valoriser l'énergie de détente en produisant de l'électricité qui peut être utilisée localement ou via un réseau électrique.

En variante, le dispositif de valorisation comporte l'étage de compression qui est agencé pour recevoir de l'énergie mécanique délivrée par l'étage de détente.

Dans ce cas, l'invention peut permettre de transmettre l'énergie fournie par la turbine directement sous forme mécanique à l'ensemble de compression de l'installation.

Il s'avère en effet généralement plus intéressant d'un point de vue économique, de modifier un compresseur par une adjonction de roues de détente que d'installer un générateur électrique.

On notera que, dans ce type de détente, le gaz détendu est fortement refroidi et que cela peut générer un risque de condensation dans la roue ou en sortie, entraînant des problèmes d'érosion, voire des problèmes de corrosion en présence de constituants tels des NOx.

Le fait de réchauffer le flux gazeux riche en azote avant détente permet à la fois d'augmenter l'énergie récupérable et d'éviter des températures trop basses en sortie de la roue ou des roues de détente.

Dans le cas où il y plusieurs étages de détente, on peut jouer sur les taux de détente de chaque étage afin d'obtenir le taux de détente global, cela en restant dans les limites des dimensionnements possibles, en particulier en respectant la vitesse périphérique maximum admissible. Cette souplesse peut permettre d'adjoindre plus facilement les roues de détente dans l'ensemble de compression.

Une roue de détente de la turbine peut avoir différentes positions :
- soit sur le même axe qu'un étage de compression, préférentiellement disposée de l'autre côté d'un pignon. On remarquera que, dans ce cas, roue de la turbine et roue du compresseur tournent à la même vitesse. Néanmoins, les vitesses internes du gaz dans les roues, en particulier les vitesses périphériques vont dépendre de la géométrie de chacune des roues.
- soit sur un second axe toujours en liaison mécanique avec un engrenage principal mais via un second pignon. Dans ce cas, la vitesse de rotation de la roue de la turbine est indépendante de la vitesse de rotation de la roue de compression et ne dépend que des diamètres respectifs de l'engrenage principal et du second pignon. On notera que l'engrenage principal peut être en liaison mécanique avec plusieurs pignons de diamètre différent mettant de la sorte en rotation plusieurs axes, chacun à une vitesse sélectionnée.
- soit sur un autre axe en liaison mécanique avec l'engrenage secondaire via un autre pignon. La vitesse de la roue de détente est alors adaptable.
- soit éventuellement sur un axe comportant un pignon secondaire en liaison mécanique avec le pignon entraînant un étage de compression. Là également, la vitesse de la roue de détente est adaptable suivant le choix du diamètre du pignon secondaire. Dans ce cas, l'étage de compression reçoit un couple à la fois du moteur et de la roue de détente.

On voit que, suivant la configuration choisie, l'énergie produite par la détente du flux gazeux riche en azote est directement transmise à l'axe de rotation de l'étage de compression ou à l'axe principal du moteur, de manière à fournir l'énergie de la détente à l'ensemble de compression.

L'engrenage secondaire peut être disposé de façon quelconque sur l'axe du moteur, c'est-à-dire du même côté vis-à-vis du moteur que l'engrenage principal ou de l'autre côté du moteur sur un prolongement de l'axe. Il peut être situé entre le moteur et l'engrenage principal ou après l'engrenage principal par exemple.

Deux roues de la turbine peuvent être éventuellement sur un même axe et être liées mécaniquement à l'axe moteur via un pignon en contact avec l'engrenage principal ou avec l'engrenage secondaire ou bien à l'axe d'une roue de compression.

Comme précédemment, l'énergie de la détente est apportée directement sur l'axe de rotation de la roue de compression ou sur l'axe du moteur. Ainsi l'énergie libérée par les détentes est fournie à l'ensemble de compression.

Dans le cas où l'installation comprend au moins deux étages de compression dans l'ensemble de compression et une turbine comprenant au moins deux étages de détente actionnables par le flux gazeux riche en azote, les taux de compression et de détente respectivement d'un au moins des étages de compression et d'un au moins étage de détente sont choisis de sorte que la roue de compression de l'étage de compression et la roue de détente de l'étage de détente aient la même vitesse de rotation et soient montées sur un même axe.

Dans le cas où l'installation comprend une turbine comportant au moins deux étages de détente actionnables par le flux gazeux riche en azote, les taux de détente respectifs des deux étages de détente sont choisis de sorte que les roues correspondantes aient la même vitesse de rotation et soient montées sur un même axe.

Dans l'invention, il se produit, dans le ou les étages de détente de la turbine, une détente d'une haute pression à une pression plus basse du flux gazeux riche en azote, détente qui a pour effet de mettre en rotation par exemple une roue de la turbine qui est freinée par le dispositif de valorisation, qui est par exemple l'ensemble de compression. L'invention permet ainsi d'améliorer l'efficacité de l'installation du fait de la récupération d'énergie mécanique à partir du flux gazeux riche en azote, ce flux étant à haute pression et permettant d'actionner le ou les étages de détente de la turbine. L'efficacité est notablement améliorée par rapport au cas où le flux d'azote sous pression serait simplement rejeté dans l'atmosphère, sans faire l'objet d'une récupération d'énergie.

Dans l'invention, le flux d'azote, une fois la détente accomplie, est refoulé dans l'atmosphère.

Selon l'un des aspects de l'invention, le nombre d'étages de détente de la turbine est ajusté en fonction des besoins.

Selon l'un des aspects de l'invention, l'étage de détente de la turbine et l'étage de compression comprennent chacun un arbre rotatif et leurs arbres sont liés de sorte qu'une rotation de l'arbre de l'étage de détente de la turbine fournisse un couple à l'arbre de l'étage de compression.

Selon l'un des aspects de l'invention, l'installation comprend au moins deux étages de compression dans l'ensemble de compression et une turbine comprenant au moins deux étages de détente actionnables par le flux gazeux riche en azote, chaque étage de détente de la turbine étant agencé pour transmettre de l'énergie mécanique à l'ensemble de compression, notamment que ce soit directement à l'un des étages de compression ou à un arbre de rotation commun à plusieurs étages de compression ou à un arbre d'un moteur qui actionne les étage de compression.

Selon l'un des aspects de l'invention, l'installation comprend au moins deux étages de compression dans l'ensemble de compression et au moins deux étages de détente dans lesquels se détend le flux gazeux riche en azote, ces étages de détente étant agencés pour délivrer aux étages de compression de l'énergie mécanique.

Selon l'un des aspects de l'invention, ces étages de détente sont disposés en série de manière à ce que le flux gazeux riche en azote traverse d'abord l'un des étages de détente puis l'autre.

Selon l'un des aspects de l'invention, chaque étage de détente est agencé pour transmettre de l'énergie mécanique à l'un des étages de compression.

Selon l'un des aspects de l'invention, le ou les étages de détente transformant l'énergie du flux gazeux riche en azote peuvent être dimensionnés pour apporter au moins 25%, notamment environ 40% ou 50%, de l'énergie mécanique nécessaire pour faire fonctionner les étages de compression.

L'invention est ainsi particulièrement avantageuse car elle permet de recycler de l'énergie et réduire la consommation d'énergie externe à l'installation.

Lors de leur passage dans le dispositif thermique, le flux gazeux riche en azote, avant détente dans l'étage de détente, est par exemple à une température ambiante, et le flux gazeux d'alimentation sortant d'un étage de compression est à une température supérieure. L'invention permet ainsi de profiter du flux gazeux riche en azote, lequel est sensiblement à température ambiante à la sortie de l'unité PSA, pour refroidir le flux gazeux d'alimentation et chauffer le flux gazeux riche en azote de sorte à améliorer le rendement thermodynamique global de l'installation. De manière avantageuse, l'azote refroidit le flux gazeux d'alimentation avant compression, ce qui rend plus efficace cette compression (car le volume à comprimer est plus faible, l'énergie de compression est plus faible) et, en même temps, le flux gazeux d'alimentation réchauffe l'azote avant détente, permettant d'augmenter l'énergie récupérable.

Selon l'un des aspects de l'invention, le dispositif thermique comporte au moins un échangeur de chaleur gaz/gaz agencé pour permettre des transferts de chaleur entre le flux gazeux d'alimentation sortant d'un étage de compression et le flux gazeux riche en azote avant détente dans l'étage de détente, de sorte à réchauffer le flux gazeux riche en azote préalablement à sa détente.

L'invention permet d'éviter que le flux riche en azote soit à une température trop basse. Selon l'un des aspects de l'invention, l'échangeur de chaleur gaz/gaz est disposé à la sortie de l'étage de compression de sorte que le flux gazeux d'alimentation passe d'abord dans l'étage de compression avant de traverser l'échangeur de chaleur.

L'échangeur de chaleur gaz/gaz permet ainsi de refroidir le flux gazeux d'alimentation qui a subi un accroissement de température du fait de la compression dans l'étage de compression.

Selon l'un des aspects de l'invention, le dispositif thermique comprend au moins deux échangeurs de chaleur gaz/gaz pour échanger de la chaleur entre le flux gazeux riche en azote et le flux gazeux d'alimentation, chaque échangeur de chaleur gaz/gaz étant placé à la sortie d'un étage de compression.

Selon l'un des aspects de l'invention, les deux échangeurs de chaleur gaz/gaz sont agencés en série pour le flux gazeux riche en azote de sorte que ce flux gazeux riche en azote passe d'abord dans l'un de ces échangeurs de chaleur gaz/gaz puis dans l'autre des échangeurs de chaleur gaz/gaz.

Selon l'un des aspects de l'invention, un étage de détente de la turbine est prévu en aval de chaque échangeur de chaleur gaz/gaz de sorte que le flux gazeux riche en azote passe d'abord dans l'échangeur de chaleur gaz/gaz puis dans l'étage de détente qui sert à transmettre du couple mécanique au dispositif de valorisation de l'énergie mécanique. Selon l'un des aspects de l'invention, les échangeurs utilisés, qu'ils soient du type gaz/gaz ou de type gaz/fluide caloporteur, sont des échangeurs de type tubulaire avec calandre.

En fonction des débits, pressions et températures, ces échangeurs peuvent être également des échangeurs à plaques.

Selon l'un des aspects de l'invention, le flux gazeux riche en azote passe à plusieurs reprises dans le même échangeur, par exemple une première fois avant détente dans le premier étage de détente puis, au sortir de cet étage de détente, une deuxième fois dans le même échangeur avant d'effectuer une seconde détente dans le deuxième étage de détente. Dans ce cas, l'échangeur est équivalent à deux échangeurs en parallèle sur le fluide caloporteur. De telles configurations d'échangeurs en parallèle sont décrites plus bas, en lien avec des exemples de mise en œuvre de l'invention.

Selon l'un des aspects de l'invention, les échanges thermiques dans les échangeurs gaz/gaz sont effectués au moyen de couples de régénérateurs thermiques, un des régénérateurs du couple accumulant la chaleur du flux gazeux d'alimentation comprimé tout en le refroidissant et l'autre en restituant cette chaleur au flux gazeux riche en azote tout en étant refroidi par ce flux. L'utilisation d'un tel couple de régénérateurs thermiques, à la place d'un échangeur de chaleur gaz/gaz, fait partie de l'invention.

Selon l'un des aspects de l'invention, le dispositif thermique comprend un ou plusieurs échangeurs de chaleur gaz/fluide caloporteur pour échanger de la chaleur entre le flux gazeux d'alimentation et un fluide caloporteur autre que le flux gazeux riche en azote, ce fluide étant par exemple de l'eau glycolée appartenant à un circuit de refroidissement. Selon l'un des aspects de l'invention, l'ensemble de compression comprend plusieurs étages de compression, un ou plusieurs échangeurs de chaleur gaz/gaz pour échanger de la chaleur entre le flux gazeux riche en azote et le flux gazeux d'alimentation et un ou plusieurs échangeurs de chaleur gaz/fluide caloporteur pour échanger de la chaleur entre le flux gazeux d'alimentation et un fluide de refroidissement autre que le flux gazeux riche en azote, chaque échangeur de chaleur étant disposé à la sortie de l'un des étages de compression de sorte que le flux gazeux d'alimentation passe d'abord dans l'étage de compression avant de traverser l'échangeur de chaleur.

Selon l'un des aspects de l'invention, tous les étages de compression sont suivis d'un échangeur de chaleur, soit de type gaz/gaz soit de type gaz/fluide caloporteur.

En variante, l'un au moins des étages de compression est directement relié à l'étage de compression suivant, sans échangeur de chaleur entre ces deux étages de compression. Selon l'un des aspects de l'invention, l'ensemble de compression comprend quatre étages de compression, deux étages étant suivis chacun par un échangeur de chaleur gaz/gaz et deux étages étant suivis chacun par un échangeur de chaleur gaz/fluide caloporteur.

Selon l'un des aspects de l'invention, dans le sens de circulation du flux gazeux d'alimentation, les deux premiers étages sont suivis chacun par un échangeur de chaleur gaz/fluide caloporteur et les deux derniers étages sont suivis chacun par un échangeur de chaleur gaz/gaz.

Ainsi le flux gazeux riche en azote sert à refroidir le flux gazeux d'alimentation à la sortie de deux étages de compression.

Selon l'un des aspects de l'invention, la turbine comprend deux étages de détente et l'un des étages de détente est placé en aval de l'un des échangeurs de chaleur gaz/gaz et l'autre des étages de détente est placé en aval de l'autre des échangeurs de chaleur gaz/gaz.

Selon l'un des aspects de l'invention, les étages de détente et les échangeurs de chaleur gaz/gaz sont ainsi en série de sorte que le flux gazeux riche en azote passe successivement dans l'un des échangeurs de chaleur gaz/gaz, puis l'un des étages de détente, puis l'autre échangeur de chaleur gaz/gaz et enfin l'autre étage de détente.

Selon l'un des aspects de l'invention, le flux gazeux riche en azote est sensiblement à la pression atmosphérique lorsqu'il quitte le dernier étage de détente, et de préférence à une température supérieure à -10°C, encore préférentiellement supérieure à 0°C.

Une telle température pourra être atteinte en réchauffant suffisamment le flux gazeux riche en azote et éventuellement en limitant le taux de détente de la turbine, par exemple avec une vanne placée sur le circuit du flux gazeux riche en azote, de préférence en sortie du dernier étage de détente.

Ceci permet d'éviter des matériaux coûteux, d'éviter ou minimiser les équipements d'isolation thermique et de faire de l'eau glacée.

Enfin le flux gazeux riche en azote peut être utilisé pour des échanges thermiques supplémentaires avant d'être refoulé dans l'atmosphère.

Selon l'un des aspects de l'invention, un ou plusieurs échangeurs de chaleur de chaleur gaz/fluide caloporteur peuvent être prévus en aval du dernier échangeur gaz/gaz, de manière à refroidir davantage le flux gazeux d'alimentation avant qu'il n'atteigne l'unité de traitement PSA.

Selon l'un des aspects de l'invention, un seul échangeur de chaleur gaz/gaz est prévu dans l'installation, cet échangeur étant placé en aval d'un des étages de compression.

Deux étages de détente sont disposés en série en aval de cet échangeur de chaleur de sorte que le flux gazeux riche en azote passe d'abord dans l'échangeur de chaleur gaz/gaz puis successivement dans les deux étages de détente.

Cela peut être avantageux si le taux de détente de la turbine de la haute pression à la basse pression est relativement faible mais néanmoins encore trop élevé pour se faire dans un seul étage de détente. Il est alors préférable de réchauffer au maximum l'entrée dans la turbine plutôt que prévoir deux échangeurs.

Selon l'un des aspects de l'invention, l'un des étages de compression est directement relié à l'étage de compression suivant, par exemple le troisième étage de compression est directement relié à un quatrième étage de compression, sans échangeur de chaleur entre ces deux étages de compression.

Selon l'un des aspects de l'invention, l'installation comprend, pour le flux gazeux riche en azote, successivement depuis la sortie de l'unité de traitement :
- un premier échangeur de chaleur gaz/gaz,
- un première étage de détente,
- un deuxième échangeur de chaleur gaz/gaz,
- un deuxième étage de détente,
ces premier et deuxième échangeurs de chaleur étant placés, pour le flux gazeux d'alimentation, en parallèle entre eux et en aval d'un étage de compression, notamment du premier étage de compression.

Ainsi, dans cet exemple, le flux gazeux riche en azote est utilisé pour refroidir le flux gazeux d'alimentation dans les deux échangeurs placés en parallèle, à la sortie du premier étage de compression.

Selon l'un des aspects de l'invention, les flux gazeux d'alimentation subdivisés dans les deux échangeurs en parallèle se rejoignent à la sortie de ces deux échangeurs pour reformer un unique flux gazeux d'alimentation qui passe dans un échangeur gaz/fluide caloporteur. Comme on peut le constater, le flux gazeux d'alimentation voit deux échangeurs gaz/gaz comme étant en parallèle, alors que le flux gazeux riche en azote voit ces deux échangeurs gaz/gaz comme étant en série.

Selon l'un des aspects de l'invention, l'installation comprend un circuit thermique intermédiaire utilisant un fluide caloporteur intermédiaire distinct du flux gazeux riche en azote et du flux gazeux d'alimentation, ce circuit intermédiaire étant agencé pour permettre des échanges thermiques entre flux gazeux riche en azote et le flux gazeux d'alimentation par l'intermédiaire du fluide caloporteur intermédiaire.

Selon l'un des aspects de l'invention, dans le cas où il y a une pluralité d'étages de compression, le flux gazeux riche en azote est réchauffé directement par un échangeur gaz/gaz, ou indirectement par un échangeur gaz/fluide caloporteur, par l'intermédiaire d'un fluide caloporteur, en prélevant de la chaleur sur flux gazeux d'alimentation sortant de l'étage de compression ayant la température la plus élevée, de préférence supérieure à 100°C, encore préférentiellement supérieure à 120°C, cette température ayant été obtenue en faisant en sorte que l'étage de compression en question ait un taux de compression plus élevé que les autres étages ou une température d'entrée plus élevée.

Selon l'un des aspects de l'invention, dans le cas où il y a une pluralité d'étages de compression, le flux gazeux riche en azote est réchauffé directement par un échangeur gaz/gaz, ou indirectement par un échangeur gaz/fluide caloporteur, par l'intermédiaire d'un fluide caloporteur, en prélevant de la chaleur sur flux gazeux d'alimentation sortant de l'étage de compression ayant la température la plus élevée, de préférence supérieure à 100°C, encore préférentiellement supérieure à 120°C, cette température ayant été obtenue en faisant en sorte que l'étage de compression en question ait un taux de compression plus élevé que la moyenne des taux de compression et/ ou une température d'entrée plus élevée que la moyenne des températures d'entrée.

Selon l'un des aspects de l'invention, il est utilisé deux fois au moins ce niveau de température le plus élevé pour réchauffer le flux gazeux riche en azote avant l'entrée dans au moins deux étages de détente.

L'invention permet ainsi de profiter du niveau de température le plus élevé du flux gazeux d'alimentation pour réchauffer un maximum le flux gazeux riche en azote avant chaque étage de détente.

Le cas échéant, le flux gazeux riche en azote réchauffé par le flux gazeux d'alimentation via un échangeur gaz/gaz peut être auparavant réchauffé par un ou des échangeurs, en particulier gaz/fluide caloporteur, pour effectuer la première partie du réchauffement et profiter au maximum du niveau de température le plus élevé.

Selon l'un des aspects de l'invention, ce circuit intermédiaire comprend une pompe pour faire circuler le fluide intermédiaire.

De manière classique, l'installation peut comprendre une instrumentation (capteurs de température, de pression, de vibrations, analyseurs...), une robinetterie (vannes tout ou rien, vannes de régulation...) et des équipements annexes (filtres, soupapes, bipasse...).

Selon l'un des aspects de l'invention, le circuit intermédiaire est agencé de sorte que le fluide caloporteur intermédiaire passe dans au moins un échangeur de chaleur gaz/fluide caloporteur pour permettre un échange de chaleur entre le fluide caloporteur et le flux gazeux d'alimentation et un autre échangeur de chaleur gaz/fluide caloporteur pour permettre une échange de chaleur entre le fluide caloporteur et le flux gazeux riche en azote qui est placé en amont d'un étage de détente de sorte que le flux gazeux riche en azote passe dans cet échangeur pour être réchauffé par le fluide caloporteur intermédiaire avant de subir une détente dans l'étage de détente.

Selon l'un des aspects de l'invention, l'échangeur de chaleur gaz/fluide caloporteur pour permettre un échange de chaleur entre le fluide caloporteur et le flux gazeux d'alimentation est placé en aval du premier étage de compression de sorte que le flux gazeux d'alimentation est refroidi par le fluide intermédiaire à la sortie de ce premier étage de compression.

Selon l'un des aspects de l'invention, le circuit intermédiaire est agencé pour traverser deux échangeurs de chaleur gaz/fluide caloporteur pour permettre un échange de chaleur entre le fluide caloporteur et le flux gazeux riche en azote, ces échangeurs étant chacun placés en amont d'un étage de détente.

Selon l'un des aspects de l'invention, ces deux échangeurs de chaleur gaz/fluide caloporteur pour permettre un échange de chaleur entre le fluide caloporteur et le flux gazeux riche en azote sont placés en parallèle pour le fluide caloporteur intermédiaire de sorte que ce fluide intermédiaire soit subdivisé en deux courants chacun passant dans l'un de ces échangeurs. Selon l'un des aspects de l'invention, le flux gazeux riche en azote voit, quant à lui, une disposition en série des échangeurs de chaleur gaz/fluide caloporteur et les deux étages de détente.

Selon l'un des aspects de l'invention, le flux gazeux riche en azote produit à partir du flux gazeux d'alimentation humide, est séché avant détente dans l'étage de détente, de sorte à contenir moins de 50 ppm d'H20, préférentiellement moins de 5 ppm d'H2O.

L'invention a encore pour objet un procédé pour récupérer du CO2 dans un flux gazeux d'alimentation qui est notamment une fumée de combustion, ce procédé comportant les étapes suivantes :
- comprimer, à l'aide d'un étage de compression, le flux gazeux d'alimentation,
- traiter, à l'aide d'une unité de traitement, le flux gazeux d'alimentation préalablement comprimé, par adsorption à modulation de pression pour produire, à partir du flux gazeux d'alimentation, un flux gazeux riche en CO2 en basse pression et un flux gazeux riche en azote en haute pression,
- utiliser une turbine comportant au moins un étage de détente capable de délivrer une énergie mécanique générée par la détente du flux gazeux riche en azote dans cet étage de détente,
- permettre des transferts de chaleur entre le flux gazeux d'alimentation sortant de l'étage de compression et le flux gazeux riche en azote avant détente dans l'étage de détente, de sorte à réchauffer le flux gazeux riche en azote préalablement à sa détente,
- valoriser l'énergie mécanique délivrée par l'étage de détente, soit pour actionner l'ensemble de compression, soit pour produire de l'électricité à l'aide d'un générateur électrique.

Selon l'un des aspects de l'invention, la fraction de l'énergie thermique de compression est récupérée par le flux gazeux riche en azote au moyen d'échange thermique direct avec le flux gazeux d'alimentation en sortie d'au moins un étage de compression et/ou au moyen d'échange thermique indirect via un fluide caloporteur.

Selon l'un des aspects de l'invention, le flux gazeux riche en azote est réchauffé avant d'être détendu à travers chacun des étages de détente de la turbine.

Selon l'un des aspects de l'invention, il est mis en œuvre un dispositif de transmission de couple entre les arbres respectifs du ou des étages de détente de la turbine et du ou des étages de compression, ce dispositif de transmission de couple comprenant notamment des engrenages et pignons pour transmettre un couple de la turbine vers l'ensemble de compression.

Selon l'un des aspects de l'invention, le flux gazeux d'alimentation est humide et contient plus de 10 ppm de NOx, le flux gazeux riche en azote est séché avant détente de sorte à contenir moins de 50 ppm d'H20, préférentiellement moins de 5 ppm d'H2O.

Ceci permet d'éviter toute possibilité de condensation lors du refroidissement provoqué par la détente, et de formation d'acide nitrique.

Selon l'un des aspects de l'invention, le séchage du flux gazeux riche en azote se fait dans l'unité de traitement du gaz d'alimentation au moyen d'un adsorbant hydrophile. L'invention peut permettre de profiter du fait que l'azote soit sec pour faire de l'eau glacée. Le gaz riche en CO2 issu de l'unité PSA peut, le cas échéant, subir des traitements additionnels dont par exemple un enrichissement complémentaire en CO2. L'azote résiduel alors extrait du gaz riche en CO2 peut être recyclé et participer à la détente et à la récupération d'énergie.

L'invention sera mieux comprise à la lecture de la description qui suit et à l'examen des figures qui l'accompagnent. Ces figures ne sont données qu'à titre illustratif mais nullement limitatif de l'invention.
La figure 1 est une représentation schématique et partielle d'une installation selon un premier exemple de l'invention ;
la figure 2 est une représentation schématique et partielle d'une installation selon un deuxième exemple de l'invention ;
la figure 3 est une représentation schématique et partielle d'une installation selon un troisième exemple de l'invention ;
la figure 4 est une représentation schématique et partielle d'une installation selon un quatrième exemple de l'invention.
la figure 5 est une représentation schématique et partielle d'une installation selon un cinquième exemple de l'invention.

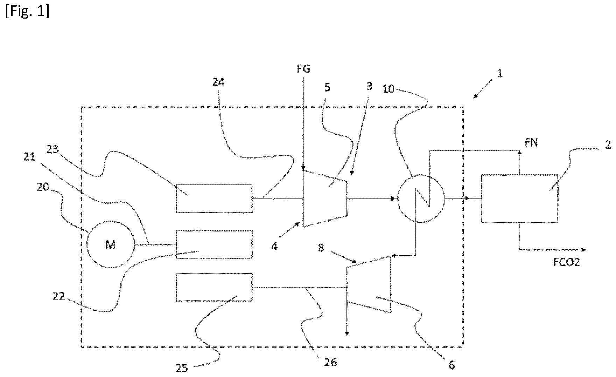

On a représenté sur la figure 1 une installation 1 pour récupérer du CO2 dans un flux gazeux d'alimentation FG qui est, dans l'exemple décrit, une fumée de combustion, cette installation comportant :
- une unité de traitement 2 du flux gazeux d'alimentation FG, par adsorption à modulation de pression (l'unité 2 étant une unité PSA) pour produire, à partir du flux gazeux d'alimentation, un flux gazeux riche en CO2 appelé FCO2, et un flux gazeux riche en azote appelé FN,
- un ensemble de compression 3 comportant au moins un étage de compression 5 pour comprimer le flux gazeux d'alimentation FG avant son entrée dans l'unité de traitement 2,
- une turbine 6 comportant au moins un étage de détente 8 capable de délivrer une énergie mécanique générée par la détente du flux gazeux riche en azote FN dans cet étage de détente 8,
- un dispositif thermique 10 agencé pour permettre des transferts de chaleur entre le flux gazeux d'alimentation FG sortant d'un étage de compression 5 et le flux gazeux riche en azote FN avant détente dans l'étage de détente 8, de sorte à réchauffer le flux gazeux riche en azote FN préalablement à sa détente,
- un dispositif de valorisation 4 de l'énergie mécanique délivrée par l'étage de détente 8.

Le flux gazeux d'alimentation FG, en amont de l'ensemble de compression 3, peut, à titre d'exemple, contenir de 10% à 60% molaire de CO2, notamment de 15% à 50% molaire de CO2. Le restant est majoritairement de l'azote et de petites quantités d'O2. Potentiellement de l'argon Ar peut être présent avec un ordre de grandeur de 1% molaire ou moins, ainsi que des traces d'impuretés, en particulier des NOx.

Le flux gazeux d'alimentation FG peut provenir d'un reformeur SMR, d'une cimenterie, d'une unité d'oxycombustion, ou une usine de chaux.

Le flux gazeux d'alimentation FG peut avoir subi un pré-traitement avant d'entrer dans l'installation, par exemple à travers une unité de lavage ou une unité de filtration.

Le flux gazeux riche en azote FN sortant de l'unité 2 de type en haute pression peut contenir, en plus de l'azote, les constituants les moins adsorbables tels que, le cas échéant, O2, Ar, NO.

Le pourcentage d'azote dans le flux riche en azote FN est notamment compris entre 50% et 90% volumétrique.

Le C02 représente une part par exemple de 50% à 85% volumétrique dans le flux gazeux FCO2 riche en CO2.

D'une manière générale, les compositions sont données en base sèche.

Le flux gazeux d'alimentation FG arrive à l'unité de traitement 2, après avoir été comprimé dans l'ensemble de compression 3, à une pression comprise dans une plage de 8 à 10 bar abs, et à une température proche de l'ambiante, par exemple entre 5 et 45°C.

Le flux gazeux riche en azote FN est refoulé de l'unité de traitement 2 à haute pression, ici à une pression comprise entre 8 et 10 bars.

L'installation 1 comporte un moteur électrique 20 ayant un axe de rotation ou arbre 21 solidaire d'un engrenage principal 22.

L'installation 1 comprend en outre un pignon 23 entraînant une roue de l'étage de compression 5 via un axe de rotation ou arbre 24.

Un autre pignon 25 en liaison avec l'engrenage principal 22 est agencé pour transmettre le couple de rotation engendré par la roue de l'étage de détente 8 de la turbine 6, via l'axe de rotation 26.

Après compression, le flux gazeux d'alimentation FG est séparé dans l'unité de traitement 2. Le flux gazeux riche en azote FN, sec et sous pression, est réchauffé dans le dispositif thermique 10.

L'étage de détente 8 transmet l'énergie provenant de la détente jusqu'à la basse pression du gaz FN chaud et sous pression dans la turbine 6 à l'engrenage principal 22 et ainsi à l'ensemble de compression 3.

Ainsi, l'énergie nécessaire à l'étage de compression 5 est fournie en partie par le moteur 20 et en partie par la turbine de détente 6. Un tel arrangement peut diminuer de façon très sensible, par exemple de moitié, l'énergie électrique consommée par le moteur 20.

Dans l'exemple décrit, le dispositif de valorisation 4 comporte l'étage de compression 5 qui est agencé pour recevoir de l'énergie mécanique délivrée par l'étage de détente 8, ainsi que le pignon 25 et l'axe de rotation 26 qui assurent la transmission du couple de rotation.

Bien entendu, diverses liaisons sont possibles entre les roues de l'étage ou des étages de compression et de l'étage ou des étages de détente.

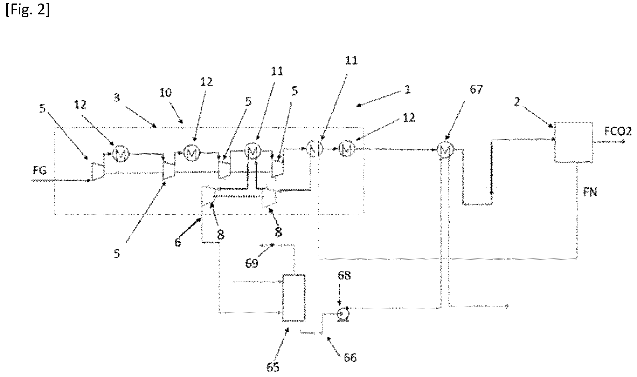

On a illustré sur la figure 2 un exemple de réalisation de l'invention dans l'ensemble de compression 3 quatre étage étages de compression 5 et la turbine 6 comporte deux étages de détente 8.

Ces étages de détente 8 pourvus chacun d'une roue, sont disposés en série de manière à ce que le flux gazeux riche en azote FN traverse d'abord l'un des étages de détente 8 puis l'autre.

Les étages de détente 8 transformant l'énergie du flux gazeux riche en azote FN peuvent apporter environ 40% de l'énergie nécessaire pour faire fonctionner les étages de compression.

Dans l'exemple illustré en figure 2, le dispositif thermique 10 est agencé pour permettre des transferts de chaleur entre le flux gazeux riche en azote FN et le flux gazeux d'alimentation FG.

Le flux gazeux riche en azote FN est par exemple à une température ambiante, et le flux gazeux d'alimentation FG est à une température supérieure.

L'invention permet ainsi de profiter du flux gazeux riche en azote FN, lequel est sensiblement à température ambiante à la sortie de l'unité PSA, pour refroidir le flux gazeux d'alimentation FG de sorte à améliorer le rendement thermodynamique global de l'installation 1.

Le dispositif thermique 10 comporte deux échangeurs gaz/gaz 11 dans l'ensemble de compression 3 et agencés pour permettre un échange thermique entre le flux gazeux riche en azote FN et le flux gazeux d'alimentation FG, pour réchauffer le flux gazeux riche en azote FN et refroidir le flux gazeux d'alimentation FG.

Chaque échangeur de chaleur gaz/gaz 11 pour échanger de la chaleur entre le flux gazeux riche en azote FN et le flux gazeux d'alimentation FG est disposé à la sortie de l'un des étages de compression 5 de sorte que le flux gazeux d'alimentation FG passe d'abord dans l'étage de compression 5 avant de traverser l'échangeur de chaleur 11.

L'échangeur gaz/gaz 11 permet ainsi de refroidir le flux gazeux d'alimentation FG qui a subi un accroissement de température du fait de la compression dans l'étage de compression 5. Les deux échangeurs gaz/gaz 11 sont agencés en série de sorte que le flux gazeux riche en azote FN passe d'abord dans l'un de ces échangeurs gaz/gaz 11 puis dans l'autre des échangeurs gaz/gaz 11.

Chacun des étages de détente 8 est prévu en aval de chaque échangeur de chaleur de gaz/gaz 11 de sorte que le flux gazeux riche en azote FN passe d'abord dans l'échangeur de chaleur gaz/gaz 11 puis dans l'étage de détente 8 qui sert à transmettre du couple mécanique à l'étage de compression 5 dédié.

L'ensemble de compression 3 comprend trois échangeurs de chaleur gaz/fluide caloporteur 12 pour échanger de la chaleur entre le flux gazeux d'alimentation FG et un fluide de refroidissement autre que le flux gazeux riche en azote, ce fluide étant ici de l'eau glycolée appartenant à un circuit de refroidissement.

Chaque échangeur de chaleur 11 ou 12 est disposé à la sortie de l'un des étages de compression 5 de sorte que le flux gazeux d'alimentation FG passe d'abord dans l'étage de compression 5 avant de traverser l'échangeur de chaleur 11 ou 12.

Dans l'exemple de la figure 2, tous les étages de compression 5 sont suivis d'un échangeur de chaleur, soit du type gaz/gaz 11 soit du type gaz/fluide caloporteur 12.

Dans le sens de circulation du flux gazeux d'alimentation FG, les deux premiers étages de compression 5, qui sont les étages numéro 1 et numéro 2, sont suivis chacun par un échangeur de chaleur gaz/fluide caloporteur 12.

Les deux derniers étages 5 sont suivis chacun par un échangeur de chaleur gaz/gaz 11.

Ainsi le flux gazeux riche en azote FN sert à refroidir le flux gazeux d'alimentation FG à la sortie de deux étages de compression 5, qui sont les étages numéro 3 et numéro 4.

Le dernier échangeur gaz/fluide caloporteur 12 est placé en aval du dernier échangeur gaz/gaz 11 de manière à refroidir davantage le flux gazeux d'alimentation avant qu'il n'atteigne l'unité de traitement PSA.

Le flux gazeux riche en azote est, quant à lui, réchauffé via les échangeurs 11 par le fluide d'alimentation FG.

Chaque étage 8 de turbine est placé en aval de l'un des échangeurs gaz/gaz 11.

Les étages de détente 8 et les deux échangeurs gaz/gaz 11 sont ainsi en série de sorte que le flux gazeux riche en azote FN passe successivement dans l'un des échangeurs gaz/gaz 11, puis l'un des étages de détente 8, puis l'autre échangeur gaz/gaz 11 et enfin l'autre étage de détente 8.

Le flux gazeux riche en azote FN est sensiblement à la pression atmosphérique lorsqu'il quitte la dernière turbine 6, et de préférence à une température supérieure à -10°C, encore préférentiellement supérieure à 0°C.

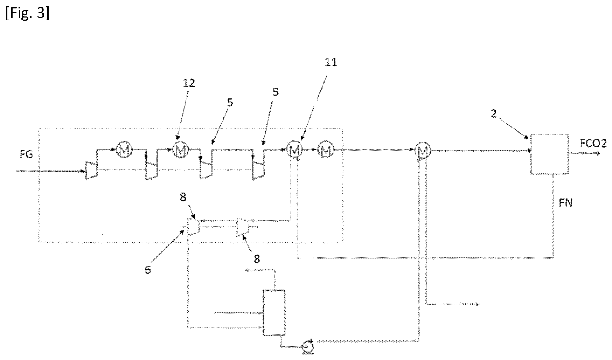

Dans une variante illustrée sur la figure 3, l'un des étages de compression 5 est directement relié à l'étage de compression 5 suivant, sans échangeur de chaleur 11 ou 12 entre ces deux étages de compression 5. Il est prévu, comme dans l'exemple de la figure 2, deux étages de détente 8.

Dans l'exemple de la figure 3, un seul échangeur de chaleur gaz/gaz 11 est prévu dans l'installation 1, cet échangeur 11 étant placé en aval du dernier des quatre étages de compression 5.

Ainsi le flux gazeux riche en azote FN passe d'abord dans l'échangeur de chaleur 11 puis successivement dans les deux turbines 6.

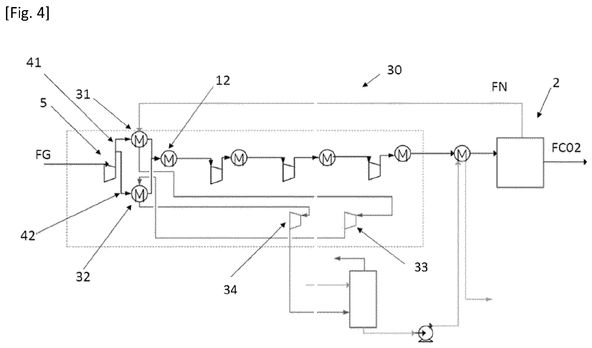

Dans l'exemple illustré sur la figure 4, l'installation 30 comprend, pour le flux gazeux riche en azote FN, successivement depuis la sortie de l'unité de traitement :
- un premier échangeur de chaleur gaz/gaz 31,
- un premier étage de détente 33,
- un deuxième échangeur de chaleur gaz/gaz 32,
- une deuxième étage de détente 34,
- les premier et deuxième échangeurs de chaleur gaz/gaz 31 et 32 étant placés, pour le flux gazeux d'alimentation FG, en parallèle entre eux et en aval du premier des quatre étages de compression 5.

Ainsi, dans cet exemple, le flux gazeux riche en azote FN est utilisé pour refroidir le flux gazeux d'alimentation FG dans les deux échangeurs 31 et 32 placés en parallèle, à la sortie du premier étage de compression 5.

Les flux gazeux d'alimentation FG subdivisés en deux branches 41 et 42 dans les deux échangeurs 31 et 32 en parallèle se rejoignent à la sortie de ces deux échangeurs 31 et 32 pour reformer un unique flux gazeux d'alimentation FG qui passe dans un échangeur gaz/fluide caloporteur 12.

Comme on peut le constater, le flux gazeux d'alimentation FG voit les deux échangeurs de gaz/gaz 31 et 32 comme étant en parallèle, alors que le flux gazeux riche en azote FN voit ces deux échangeurs gaz/gaz 31 et 32 comme étant en série.

Les étages de compression 5 sont agencés pour amener le flux gazeux d'alimentation FG d'une pression légèrement inférieure à la pression atmosphérique jusqu'à environ 8 ou 9 bar abs qui est la pression de fonctionnement de l'unité PSA.

En base sèche, le flux gazeux d'alimentation contient 22% molaire de CO2, 75% molaire de N2, 2% molaire de O2, 1% molaire d'Ar ainsi que des impuretés au niveau de quelques dizaines de ppm. La température est d'environ 60°C évitant ainsi la condensation d'eau liquide.

L'ensemble de compression 3 comprend un moteur électrique, non représenté, actionnant les quatre étages de compression 5 en série. Les étages de détente 8 de la turbine 6 également en série fournissent une part de l'énergie nécessaire à la compression dans l'ensemble de compression 3. Dans le cas présent, les roues des étages de détente 8 fournissent environ 40% de cette énergie.

Le gaz détendu dans les étages de détente 8 est le flux haute pression issu de l'unité PSA. Il contient 94% molaire de N2, 3% molaire de CO2, 2% molaire de O2, 1% molaire de Ar. Ce gaz est disponible à environ 8 bar abs et est détendu jusqu'à une pression un peu supérieure à la pression atmosphérique. Afin d'augmenter l'énergie récupérable lors de la détente, ce flux est réchauffé avant d'entrer dans chacune des étages de détente jusqu'à une température de 70 à 80°C. La chaleur correspondante est récupérée sur le flux gazeux d'alimentation FG sortant du premier étage de compression 5.

Les pressions inter-étages de l'ensemble de compression 5 sont de l'ordre de 2 bar abs (sortie étage 1), 3.5 bar abs (sortie étage 2), 5.5 bar abs (sortie étage 3). La pression inter-étages de détente 8 est de 3 bar abs. De même, les températures de sortie des étages de compression sont respectivement de l'ordre de 140 à 150°C (sortie étage 1), et de 75 à 85°C pour les étages suivant. Les températures d'échappement des étages de détente 8 sont autour de 0°C.

L'étagement des pressions, et plus généralement les conditions opératoires, sont choisis de telle sorte que les roues d'un étage de l'ensemble de compression et du second étage de détente 8 aient la même vitesse de rotation. Ainsi, ces deux roues peuvent avoir le même axe de rotation, par exemple de part et d'autre d'un pignon.

Il peut en être de même en ce qui concerne le premier étage de détente et un autre étage de compression.

Au niveau thermique, le flux gazeux d'alimentation sortant du premier étage de compression 5 est d'abord refroidi par échange avec le flux riche en azote FN. Ces échanges se font au moyen de deux échangeurs gaz-gaz 31 et 32 qui sont à tubes en U, en parallèle sur le flux gazeux d'alimentation FG sensiblement réparti par moitié entre les deux échangeurs 31 et 32.

En sortie de ces échangeurs 31 et 32, le flux gazeux d'alimentation est refroidi jusqu'à température ambiante par de l'eau de réfrigération, séparé de l'eau de condensation et est dirigé vers le second étage de compression 5. En sortie de chaque étage 5, le flux gazeux d'alimentation est alors refroidi jusqu'à température ambiante par de l'eau de réfrigération, séparé de l'eau de condensation éventuelle.

On notera qu'on utilise le flux gazeux d'alimentation FG à la température la plus élevée pour réchauffer l'admission des étages de détente 8, ceci permet d'augmenter l'énergie récupérable.

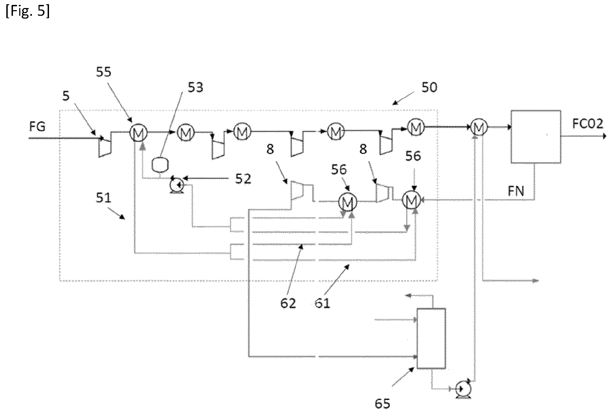

Dans l'exemple de réalisation de la figure 5, l'installation 50 comprend un circuit thermique intermédiaire 51 utilisant un fluide caloporteur intermédiaire distinct du flux gazeux riche en azote FN et du flux gazeux d'alimentation FCO2, ce circuit intermédiaire 51 étant agencé pour permettre des échanges thermiques entre flux gazeux riche en azote FN et le flux gazeux d'alimentation FCO2 par l'intermédiaire du fluide caloporteur intermédiaire.

Ce circuit intermédiaire 51 comprend une pompe 52 pour faire circuler le fluide intermédiaire. Un capteur de température 53 peut être prévu sur ce circuit intermédiaire 51. Le circuit intermédiaire 51 est agencé de sorte que le fluide caloporteur intermédiaire passe dans un échangeur de chaleur gaz/fluide caloporteur 55 agencé pour permettre des échanges de chaleur entre le fluide caloporteur intermédiaire du circuit 51 et le flux gazeux d'alimentation FG, et deux autres échangeurs de chaleur gaz/fluide caloporteur 56 qui sont chacun placés en amont d'un étage de détente 8 de sorte que le flux gazeux riche en azote FN passe dans cet échangeur 56 pour être réchauffé par le fluide caloporteur du circuit 51 avant de subir une détente dans les étages de détente 8.

L'échangeur de chaleur gaz/fluide caloporteur 55 pour refroidir le flux gazeux d'alimentation FG est placé en aval du premier étage de compression 5 de sorte que le flux gazeux d'alimentation FG est refroidi par le fluide intermédiaire à la sortie de ce premier étage de compression 5.

Les deux échangeurs 56 sont placés en parallèle pour le fluide intermédiaire de sorte que le fluide intermédiaire soit subdivisé en deux courants 61 et 62 chacun passant dans l'un de ces échangeurs 56.

Le flux gazeux riche en azote FN voit, quant à lui, une disposition en série des échangeurs 56 et des étages de détente 8. Chaque étage de détente 8 est placé en aval de l'un des échangeurs 56.

Dans les installations qui viennent d'être décrites, est prévue une unité de production d'eau glacée 65 à l'aide de l'azote sec du flux FN. Le courant d'eau glacée 66 issu de l'unité 65 est utilisé dans un échangeur de chaleur 67 pour refroidir encore le flux gazeux FG qui pénètre dans l'unité PSA. Une pompe 68 est prévue pour mettre en circulation le courant d'eau glacée. Le flux FN est refoulé finalement dans l'atmosphère à l'emplacement 69.

Le flux gazeux FCO2 riche en CO2 issu de l'unité PSA peut, le cas échéant, subir des traitements additionnels dont par exemple un enrichissement complémentaire en CO2. L'azote résiduel alors extrait du gaz riche en CO2 peut être recyclé et participer à la détente et à la récupération d'énergie.

## Revendications

1. Installation (1) pour récupérer du CO2 dans un flux gazeux d'alimentation (FG) qui est notamment une fumée de combustion, cette installation comportant :
- une unité de traitement (2) du flux gazeux d'alimentation (FG), par adsorption à modulation de pression pour produire, à partir du flux gazeux d'alimentation, un flux gazeux riche en CO2 (FCO2) et un flux gazeux riche en azote (FN),
- un ensemble de compression (3) comportant au moins un étage de compression (5) pour comprimer le flux gazeux d'alimentation avant son entrée dans l'unité de traitement,
- une turbine (6) comportant au moins un étage de détente (8) capable de délivrer une énergie mécanique générée par la détente du flux gazeux riche en azote (FN) dans cet étage de détente,
- un dispositif (4) de valorisation de l'énergie mécanique délivrée par l'étage de détente,
**caractérisée en ce qu'**elle comprend un dispositif thermique (10) agencé pour permettre des transferts de chaleur entre le flux gazeux d'alimentation (FG) sortant d'un étage de compression (5) et le flux gazeux riche en azote (FN) avant détente dans l'étage de détente, de sorte à réchauffer le flux gazeux riche en azote (FN) préalablement à sa détente.

2. Installation selon la revendication précédente, dans laquelle le dispositif de valorisation est un générateur électrique capable d'utiliser l'énergie mécanique délivrée par l'étage de détente pour produire de l'électricité.

3. Installation selon la revendication 1, dans laquelle le dispositif de valorisation (4) comporte l'étage de compression (5) qui est agencé pour recevoir de l'énergie mécanique délivrée par l'étage de détente.

4. Installation selon la revendication précédente, comprenant au moins deux étages de compression (5) dans l'ensemble de compression et une turbine comprenant au moins deux étages de détente actionnables (6) par le flux gazeux riche en azote (FN), chaque étage de détente de la turbine étant agencé pour transmettre de l'énergie mécanique à l'ensemble de compression, notamment que ce soit directement à l'un des étages de compression ou à un arbre de rotation commun à plusieurs étages de compression ou à un arbre d'un moteur qui actionne les étage de compression.

5. Installation selon la revendication précédente, dans laquelle ces étages de détente (8) sont disposés en série de manière à ce que le flux gazeux riche en azote (FN) traverse d'abord l'un étages de détente puis l'autre.

6. Installation selon l'une des revendications 3 à 5, dans laquelle le ou les étages de détente (8) sont dimensionnés pour apporter au moins 25%, notamment environ 40% ou 50%, de l'énergie mécanique nécessaire pour faire fonctionner les étages de compression (5).

7. Installation selon l'une des revendications précédentes, dans laquelle le dispositif thermique (10) comporte au moins un échangeur de chaleur gaz/gaz (11) agencé pour permettre des transferts de chaleur entre le flux gazeux d'alimentation (FG) sortant d'un étage de compression (5) et le flux gazeux riche en azote (FN) avant détente dans l'étage de détente, de sorte à réchauffer le flux gazeux riche en azote (FN) préalablement à sa détente.

8. Installation selon la revendication précédente, dans laquelle l'échangeur de chaleur gaz/gaz (11) est disposé à la sortie de l'étage de compression (5) de sorte que le flux gazeux d'alimentation (FG) passe d'abord dans l'étage de compression (5) avant de traverser l'échangeur de chaleur (11).

9. Installation selon l'une des revendications précédentes, dans laquelle le dispositif thermique (10) comprend un ou plusieurs échangeurs de chaleur gaz/fluide caloporteur (12) pour échanger de la chaleur entre le flux gazeux d'alimentation (FG) et un fluide caloporteur autre que le flux gazeux riche en azote, ce fluide étant par exemple de l'eau glycolée appartenant à un circuit de refroidissement.

10. Installation selon l'une des revendications 8 et 9, dans lequel l'installation comprend, pour le flux gazeux riche en azote (FN), successivement depuis la sortie de l'unité de traitement :
- un premier échangeur de chaleur gaz/gaz (11),
- un première étage de détente (8),
- un deuxième échangeur de chaleur gaz/gaz (11),
- un deuxième étage de détente (8),
les premier et deuxième échangeurs de chaleur étant placés, pour le flux gazeux d'alimentation (FG), en parallèle entre eux et en aval d'un étage de compression (5), notamment du premier étage de compression.

11. Installation selon l'une des revendications précédentes, dans lequel l'installation comprend un circuit thermique intermédiaire (51) utilisant un fluide caloporteur intermédiaire distinct du flux gazeux riche en azote (FN) et du flux gazeux d'alimentation (FG), ce circuit intermédiaire étant agencé pour permettre des échanges thermiques entre flux gazeux riche en azote et le flux gazeux d'alimentation par l'intermédiaire du fluide caloporteur intermédiaire.

12. Installation selon l'une des revendications précédentes, dans laquelle le flux gazeux riche en azote (FN) produit à partir du flux gazeux d'alimentation (FG) humide, est séché avant détente dans l'étage de détente, de sorte à contenir moins de 50 ppm d'H20, préférentiellement moins de 5 ppm d'H2O.

## Patentansprüche

1. Eine Anlage (1) zur Rückgewinnung von CO2 aus einem Einsatzgasstrom (FG), der insbesondere ein Verbrennungsabgas ist, wobei diese Anlage Folgendes umfasst:
- eine Behandlungseinheit (2) des Einsatzgasstroms (FG) durch Druckwechseladsorption, um aus dem Einsatzgasstrom einen CO2-reichen Gasstrom (FCO2) und einen stickstoffreichen Gasstrom (FN) zu erzeugen,
- eine Verdichtungsanordnung (3), die mindestens eine Verdichtungsstufe (5) umfasst, um den Einsatzgasstrom vor seinem Eintritt in die Behandlungseinheit zu verdichten,
- eine Turbine (6), die mindestens eine Entspannungsstufe (8) umfasst, die in der Lage ist, mechanische Energie zu liefern, die durch die Entspannung des stickstoffreichen Gasstroms (FN) in dieser Entspannungsstufe erzeugt wird,
- eine Vorrichtung (4) zur Nutzbarmachung der von der Entspannungsstufe gelieferten mechanischen Energie,
**dadurch gekennzeichnet, dass** sie eine thermische Vorrichtung (10) umfasst, die so eingerichtet ist, dass sie Wärmeübertragungen zwischen dem aus einer Verdichtungsstufe (5) austretenden Einsatzgasstrom (FG) und dem stickstoffreichen Gasstrom (FN) vor der Entspannung in der Entspannungsstufe ermöglicht, um den stickstoffreichen Gasstrom (FN) vor seiner Entspannung zu erwärmen.

2. Anlage nach dem vorhergehenden Anspruch, wobei die Vorrichtung zur Nutzbarmachung ein elektrischer Generator ist, der in der Lage ist, die von der Entspannungsstufe gelieferte mechanische Energie zur Erzeugung von Elektrizität zu nutzen.

3. Anlage nach Anspruch 1, wobei die Vorrichtung zur Nutzbarmachung (4) die Verdichtungsstufe (5) umfasst, die so eingerichtet ist, dass sie die von der Entspannungsstufe gelieferte mechanische Energie aufnimmt.

4. Anlage nach dem vorhergehenden Anspruch, umfassend mindestens zwei Verdichtungsstufen (5) in der Verdichtungsanordnung und eine Turbine, die mindestens zwei durch den stickstoffreichen Gasstrom (FN) betätigbare Entspannungsstufen (6) umfasst, wobei jede Entspannungsstufe der Turbine so eingerichtet ist, dass sie mechanische Energie auf die Verdichtungsanordnung überträgt, insbesondere entweder direkt auf eine der Verdichtungsstufen oder auf eine gemeinsame Rotationswelle mehrerer Verdichtungsstufen oder auf eine Welle eines Motors, der die Verdichtungsstufe antreibt.

5. Anlage nach dem vorhergehenden Anspruch, wobei diese Entspannungsstufen (8) in Reihe angeordnet sind, so dass der stickstoffreiche Gasstrom (FN) zuerst eine der Entspannungsstufen und dann die andere durchströmt.

6. Anlage nach einem der Ansprüche 3 bis 5, wobei die Entspannungsstufe oder -stufen (8) so bemessen sind, dass sie mindestens 25 %, insbesondere etwa 40 % oder 50 %, der für den Betrieb der Verdichtungsstufen (5) erforderlichen mechanischen Energie liefern.

7. Anlage nach einem der vorhergehenden Ansprüche, wobei die thermische Vorrichtung (10) mindestens einen Gas/Gas-Wärmetauscher (11) umfasst, der so eingerichtet ist, dass er Wärmeübertragungen zwischen dem aus einer Verdichtungsstufe (5) austretenden Einsatzgasstrom (FG) und dem stickstoffreichen Gasstrom (FN) vor der Entspannung in der Entspannungsstufe ermöglicht, um den stickstoffreichen Gasstrom (FN) vor seiner Entspannung zu erwärmen.

8. Anlage nach dem vorhergehenden Anspruch, wobei der Gas/Gas-Wärmetauscher (11) am Ausgang der Verdichtungsstufe (5) angeordnet ist, so dass der Einsatzgasstrom (FG) zuerst die Verdichtungsstufe (5) durchläuft, bevor er den Wärmetauscher (11) durchläuft.

9. Anlage nach einem der vorhergehenden Ansprüche, wobei die thermische Vorrichtung (10) einen oder mehrere Gas/Wärmeträgerfluid-Wärmetauscher (12) zum Wärmeaustausch zwischen dem Einsatzgasstrom (FG) und einem anderen Wärmeträgerfluid als dem stickstoffreichen Gasstrom umfasst, wobei dieses Fluid beispielsweise Glykolwasser ist, das zu einem Kühlkreislauf gehört.

10. Anlage nach einem der Ansprüche 8 und 9, wobei die Anlage für den stickstoffreichen Gasstrom (FN) nacheinander vom Ausgang der Behandlungseinheit Folgendes umfasst:
- einen ersten Gas/Gas-Wärmetauscher (11),
- eine erste Entspannungsstufe (8),
- einen zweiten Gas/Gas-Wärmetauscher (11),
- eine zweite Entspannungsstufe (8),
wobei der erste und der zweite Wärmetauscher für den Einsatzgasstrom (FG) parallel zueinander und stromabwärts einer Verdichtungsstufe (5), insbesondere der ersten Verdichtungsstufe, angeordnet sind.

11. Anlage nach einem der vorhergehenden Ansprüche, wobei die Anlage einen thermischen Zwischenkreislauf (51) umfasst, der ein von dem stickstoffreichen Gasstrom (FN) und dem Einsatzgasstrom (FG) verschiedenes Zwischen-Wärmeträgerfluid verwendet, wobei dieser Zwischenkreislauf so eingerichtet ist, dass er Wärmeaustauschvorgänge zwischen dem stickstoffreichen Gasstrom und dem Einsatzgasstrom über das Zwischen-Wärmeträgerfluid ermöglicht.

12. Anlage nach einem der vorhergehenden Ansprüche, wobei der aus dem feuchten Einsatzgasstrom (FG) erzeugte stickstoffreiche Gasstrom (FN) vor der Entspannung in der Entspannungsstufe getrocknet wird, so dass er weniger als 50 ppm H2O, vorzugsweise weniger als 5 ppm H2O, enthält.

## Claims

1. An installation (1) for recovering CO2 in a feed gas stream (FG) which is in particular a combustion smoke, this installation comprising:
- a treatment unit (2) of the feed gas stream (FG), by pressure swing adsorption to produce, from the feed gas stream, a CO2-rich gas stream (FCO2) and a nitrogen-rich gas stream (FN),
- a compression assembly (3) comprising at least one compression stage (5) to compress the feed gas stream before it enters the treatment unit,
- a turbine (6) comprising at least one expansion stage (8) capable of delivering mechanical energy generated by the expansion of the nitrogen-rich gas stream (FN) in this expansion stage,
- a device (4) for valorizing the mechanical energy delivered by the expansion stage,
**characterized in that** it comprises a thermal device (10) arranged to allow heat transfers between the feed gas stream (FG) exiting a compression stage (5) and the nitrogen-rich gas stream (FN) before expansion in the expansion stage, so as to reheat the nitrogen-rich gas stream (FN) prior to its expansion.

2. The installation according to the preceding claim, in which the valorization device is an electric generator capable of using the mechanical energy delivered by the expansion stage to produce electricity.

3. The installation according to claim 1, in which the valorization device (4) comprises the compression stage (5) which is arranged to receive mechanical energy delivered by the expansion stage.

4. The installation according to the preceding claim, comprising at least two compression stages (5) in the compression assembly and a turbine comprising at least two expansion stages (6) operable by the nitrogen-rich gas stream (FN), each expansion stage of the turbine being arranged to transmit mechanical energy to the compression assembly, in particular either directly to one of the compression stages or to a rotation shaft common to several compression stages or to a motor shaft which drives the compression stage.

5. The installation according to the preceding claim, in which these expansion stages (8) are arranged in series so that the nitrogen-rich gas stream (FN) first passes through one of the expansion stages then the other.

6. The installation according to one of claims 3 to 5, in which the expansion stage or stages (8) are dimensioned to provide at least 25%, in particular about 40% or 50%, of the mechanical energy necessary to operate the compression stages (5).

7. The installation according to one of the preceding claims, in which the thermal device (10) comprises at least one gas/gas heat exchanger (11) arranged to allow heat transfers between the feed gas stream (FG) exiting a compression stage (5) and the nitrogen-rich gas stream (FN) before expansion in the expansion stage, so as to reheat the nitrogen-rich gas stream (FN) prior to its expansion.

8. The installation according to the preceding claim, in which the gas/gas heat exchanger (11) is arranged at the outlet of the compression stage (5) so that the feed gas stream (FG) first passes through the compression stage (5) before passing through the heat exchanger (11).

9. The installation according to one of the preceding claims, in which the thermal device (10) comprises one or more gas/heat transfer fluid heat exchangers (12) for exchanging heat between the feed gas stream (FG) and a heat transfer fluid other than the nitrogen-rich gas stream, this fluid being for example glycol water belonging to a cooling circuit.

10. The installation according to one of claims 8 and 9, in which the installation comprises, for the nitrogen-rich gas stream (FN), successively from the outlet of the treatment unit:
- a first gas/gas heat exchanger (11),
- a first expansion stage (8),
- a second gas/gas heat exchanger (11),
- a second expansion stage (8),
the first and second heat exchangers being placed, for the feed gas stream (FG), in parallel with each other and downstream of a compression stage (5), in particular of the first compression stage.

11. The installation according to one of the preceding claims, in which the installation comprises an intermediate thermal circuit (51) using an intermediate heat transfer fluid distinct from the nitrogen-rich gas stream (FN) and the feed gas stream (FG), this intermediate circuit being arranged to allow thermal exchanges between the nitrogen-rich gas stream and the feed gas stream via the intermediate heat transfer fluid.

12. The installation according to one of the preceding claims, in which the nitrogen-rich gas stream (FN) produced from the humid feed gas stream (FG), is dried before expansion in the expansion stage, so as to contain less than 50 ppm of H2O, preferably less than 5 ppm of H2O.
